# EUROPEAN PATENT SPECIFICATION

(11) **EP 3 477 250 B1**
(45) Date of publication and mention of the grant of the patent: **09.03.2022**
(21) Application number: 18199634.9
(22) Date of filing: 10.10.2018
(51) Int. Cl.: G01B 11/14, B64C 39/02

(54) **SYSTEM AND METHOD FOR MONITORING CIVIL ENGINEERING WORKS AND INFRASTRUCTURES PARTICULARLY IN URBAN AREAS**
SYSTEM UND VERFAHREN ZUM ÜBERWACHEN VON BAUWERKEN DES HOCH- UND TIEFBAUS UND INFRASTRUKTUREN, INSBESONDERE IN STÄDTISCHEN GEBIETEN
SYSTÈME ET PROCÉDÉ DE SURVEILLANCE DE TRAVAUX DE GÉNIE CIVIL ET D'INFRASTRUCTURES EN PARTICULIER EN ZONE URBAINE

(30) Priority: 27.10.2017 IT 201700122330
(43) Date of publication of application: 01.05.2019
(73) Proprietor: ITALOIBERICA ENGINEERING GROUP SL, 33002 OVIEDO ( ASTURIAS) (ES); Pagano, Emilia, 00187 Roma (IT)
(72) Inventor: PAGANO, Emilia, 00187 ROMA (IT); LANCIANO, Mario Bruno, 43121 PARMA (IT)
(74) Representative: Modiano, Micaela Nadia

(56) References cited:
- WO-A1-2017/139282
- US-A1- 2008 059 065
- US-A1- 2013 162 822
- US-A1- 2014 177 928
- US-A1- 2017 304 844

## Description

The present invention relates to a system and a method for monitoring civil engineering works and infrastructures particularly in urban areas. The system and the method described herein are particularly, but not exclusively, useful and practical in the field of remote sensing, i.e., the set of techniques and methods for the acquisition of qualitative and quantitative information about objects located at a certain distance from a measurement device.

In recent decades there has been a progressive evolution of buildings toward structural systems that are increasingly complex and sophisticated. Hence the need to know the behavior of buildings over time and the history of the stresses to which they are subjected, in order to acquire data and measurements necessary for any prevention and/or renovation interventions.

Structural monitoring is one of the most advanced methods for predicting degenerative phenomena affecting structures and is also an excellent element for validating theoretical knowledge or corrections if any. Furthermore, structural monitoring, implemented as an ongoing activity, is an essential tool for establishing whether the structure still retains the design requirements and whether it has the same stress states measured at the time of its installation. The main measurable parameters include: loads on supports, acceleration and vibrations, movements on joints, the temperature of the structure, and the like.

Nowadays various systems and solutions are in use for monitoring civil engineering works and structures which comprise devices such as, for example, triaxial accelerometers, triaxial seismometers, corrosion sensors, data acquisition units, and the like.

US 2014/177928 A1 discloses a system for mapping powerlines comprising an aircraft equipped with a LiDAR scanner system for imaging said powerlines.

However, these solutions are not free from drawbacks, which include the need to install multiple devices in order to ensure the correct operation of the monitoring system.

Another drawback of these known solutions lies in the fact that they are arranged in positions that are difficult to reach.

A further drawback of these known solutions lies in the fact that they have high installation and maintenance costs.

Another drawback of these known solutions lies in the fact that they have high energy consumption.

The aim of the present invention is to overcome the limitations of the known art described above, by providing a system and a method for monitoring civil engineering works and infrastructures particularly in urban areas that make it possible to detect any displacements of the structures to be monitored by way of a plurality of markers that are positioned beforehand on such structures and are recognizable by the aircraft.

Within the scope of this aim, an object of the present invention is to conceive a system according to claim 1 and a method according to claim 11 for monitoring civil engineering works and infrastructures particularly in urban areas that enable a high reduction in energy consumption.

Another object of the present invention is to devise a system and a method for monitoring civil engineering works and infrastructures particularly in urban areas that make it possible to use state-of-the-art technological components.

A further object of the present invention is to conceive a system and a method for monitoring civil engineering works and infrastructures particularly in urban areas that enable a considerable reduction in the data to be analyzed.

Another object of the present invention is to devise a system and a method for monitoring civil engineering works and infrastructures particularly in urban areas that can be adapted to the various different geometries of the structures.

Another object of the present invention is to provide a system and a method for monitoring civil engineering works and infrastructures particularly in urban areas that are highly reliable, relatively simple to provide, and low cost if compared with the known art.

This aim, as well as these and other objects which will become better apparent hereinafter, are achieved by a system for monitoring civil engineering works and infrastructures particularly in urban areas, which comprises an aircraft associated with parking areas, said aircraft being connected to a remote processing device by way of a telematic communication network, characterized in that said aircraft comprises acquisition means configured to acquire respective images from a plurality of measurement markers and from a plurality of control markers, interpretation means configured to interpret said images into measurement and control data, and transceiver means configured to transmit said measurement and control data toward said remote processing device, said remote processing device being configured to process said measurement and control data that arrive from said aircraft.

Further characteristics and advantages of the invention will become better apparent from the description of a preferred but not exclusive embodiment of the system and of the method for monitoring civil engineering works and infrastructures particularly in urban areas according to the invention, which is illustrated by way of non-limiting example in the accompanying drawings wherein:

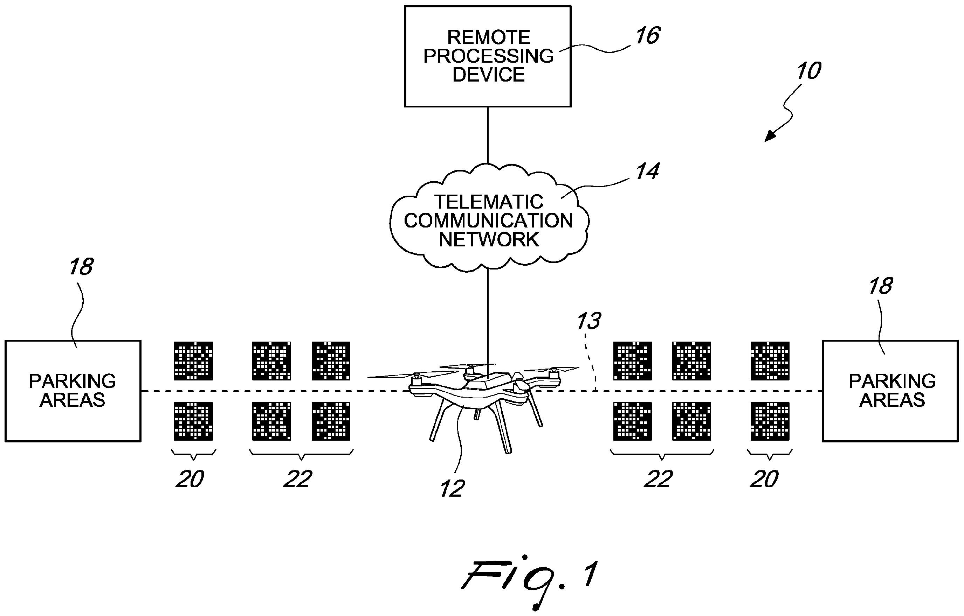

Figure 1 is a schematic block diagram of a possible embodiment of a system for monitoring civil engineering works and infrastructures particularly in urban areas, according to the present invention;
Figure 2 is a schematic block diagram of a possible embodiment of the aircraft of a system for monitoring civil engineering works and infrastructures particularly in urban areas, according to the present invention;
Figure 3 is a schematic block diagram of a possible embodiment of the remote processing device of a system for monitoring civil engineering works and infrastructures particularly in urban areas, according to the present invention;

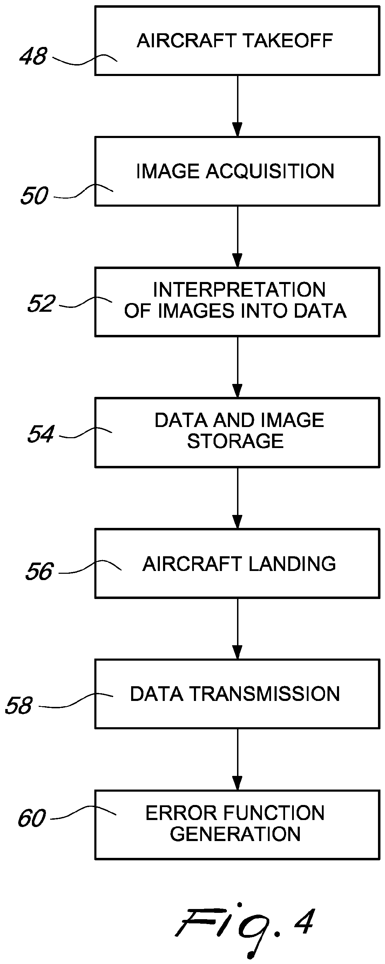

Figure 4 is a flowchart of a possible embodiment of the method for monitoring civil engineering works and infrastructures particularly in urban areas, according to the present invention.

With reference to the figures, the system for monitoring civil engineering works and infrastructures particularly in urban areas, according to the invention, generally designated by the reference numeral 10, substantially comprises an aircraft 12, parking areas 18 associated with the aircraft 12, a plurality of measurement markers 20 and a plurality of control markers 22, and a remote processing device 16 connected to the aircraft 12 by way of a telematic communication network 14.

The aircraft 12 is configured to acquire respective images from a plurality of measurement markers 20 and from a plurality of control markers 22 which are arranged on a structure to be monitored along a path 13. The aircraft 12 is further configured to interpret such images into measurement and control data. The aircraft 12 is further configured to transmit said measurement and control data toward a remote processing device 16 by way of the telematic communication network 14, such as for example the internet.

In an embodiment of the system 10 for monitoring civil engineering works and infrastructures particularly in urban areas, the aircraft 12 is a remotely piloted aircraft such as, for example, a drone or a generic aircraft characterized by the absence of a human pilot on board.

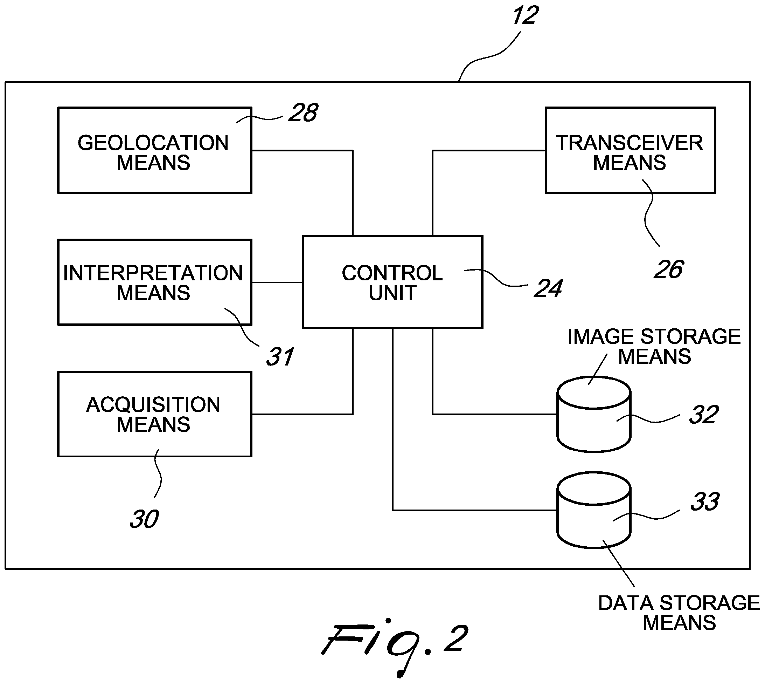

With particular reference to Figure 2, in an embodiment of the system 10 for monitoring civil engineering works and infrastructures particularly in urban areas, the aircraft 12 comprises: a control unit 24, acquisition means 30, interpretation means 31, transceiver means 26, geolocation means 28, image storage means 32, and data storage means 33.

The control unit 24 is the main functional element of the aircraft 12 of the system 10 according to the invention, and for this reason it is connected to and communicates with the other elements comprised in the aircraft 12 proper.

The control unit 24 of the aircraft 12 is provided with appropriate capabilities for computing and for interfacing with the other elements of the aircraft 12 and is configured to control, monitor and coordinate the operations of the elements of the aircraft 12 to which it is connected and with which it communicates.

The acquisition means 30 of the aircraft 12 are configured to acquire respective images from the plurality of measurement markers 20 and from the plurality of control markers 22, for example by way of using aerial photogrammetry functions.

In an embodiment of the system 10 for monitoring civil engineering works and infrastructures particularly in urban areas, the acquisition means 30 comprise a payload for aerial photogrammetry which comprises at least one optical sensor with centimeter resolution. This payload is accommodated on a platform for stabilization on three axes (Azimuth, Pitch, Roll) with the following minimum requirements:
- Correction rate ≥ 700Hz
- Pitch angle tolerance ≤ 0.05°
- Roll angle tolerance ≤ 0.05°

The acquisition means 30 are preferably connected to the image storage means 32 by way of the control unit 24.

The image storage means 32, such as for example a database, are adapted to store the images acquired by the acquisition means 30.

The interpretation means 31 of the aircraft 12 are configured to interpret the images acquired by the acquisition means 30 into measurement and control data. The interpretation means 31 are preferably connected to the data storage means 33 by way of the control unit 24.

The data storage means 33, such as for example a database, are adapted to store the measurement and control data interpreted by the interpretation means 31.

In an embodiment of the system 10 for monitoring civil engineering works and infrastructures particularly in urban areas, the measurement and control data comprise, for example, geodetic data.

The transceiver means 26 of the aircraft 12 are configured to transmit the measurement and control data toward the remote processing device 16. The transceiver means 26 of the aircraft 12 are further configured to transmit the respective images associated with the plurality of measurement markers 20 and with the plurality of control markers 22 toward the remote processing device 16.

In an embodiment of the system 10 for monitoring civil engineering works and infrastructures particularly in urban areas, the transceiver means 26 of the aircraft 12 are further configured to receive data and commands from the remote processing device 16.

The geolocation means 28 of the aircraft 12 are configured to provide at least one geographic location of the aircraft 12 to the remote processing device 16.

In an embodiment of the system 10 for monitoring civil engineering works and infrastructures particularly in urban areas, the geolocation means 28 comprise a dual-frequency, high-accuracy GNSS (Global Navigation Satellite System) receiver.

In an embodiment of the system 10 for monitoring civil engineering works and infrastructures particularly in urban areas, the aircraft 12 is configured to perform the takeoff and landing steps in parking areas 18.

The parking areas 18 associated with the aircraft 12 comprise a first parking area 18 configured for the takeoff of the aircraft 12 and a second parking area 18 configured for the landing of the aircraft 12. The parking areas 18 are further configured for the recharging of the aircraft 12. The parking areas 18 preferably comprise a permanent GNSS system (for example GPS, Galileo or Glonass), which is interconnected with a (proprietary or regional) geodetic network for the distribution of differential corrections required for post-processing analysis.

In an embodiment of the system 10 for monitoring civil engineering works and infrastructures particularly in urban areas, each parking area 18 is configured for the accommodation of at least two aircraft 12.

In a different embodiment of the system 10 for monitoring civil engineering works and infrastructures particularly in urban areas, each parking area 18 comprises at least one weather station for monitoring the environmental conditions.

In a further embodiment of the system 10 for monitoring civil engineering works and infrastructures particularly in urban areas, each parking area 18 comprises a power supply by way of an electrical distribution network or a local generator and a connection to an intranet or to the internet.

The parking areas 18 are preferably arranged along a path 13 which comprises a plurality of measurement markers 20 and a plurality of control markers 22 which are arranged on the structure to be monitored.

The measurement markers 20 comprise identifiers associated with structures that can be considered "fixed" and as a reference, i.e., structures that tend not to be subject to deformations, expansions or variations in shape over time. By way of example, such measurement markers 20 are arranged on reference structures in the immediate vicinity (up to approximately 3 km) of the infrastructure to be monitored. The measurement markers 20 are preferably geo-referenced with sub-centimeter accuracy.

The control markers 22 comprise identifiers associated with the structures to be monitored, such as, for example, the sections of a viaduct, a road or railroad portion, and the like. The control markers 22 are preferably geo-referenced with sub-centimeter accuracy at an epoch t0, i.e., at the instant that corresponds to their installation on the structure to be monitored.

In an embodiment of the system 10 for monitoring civil engineering works and infrastructures particularly in urban areas, the measurement markers 20 and the control markers 22 comprise, for example, metallic plates to be positioned, in visible positions, on the infrastructures to be monitored.

In an embodiment of the system 10 for monitoring civil engineering works and infrastructures particularly in urban areas, the measurement markers 20 and the control markers 22 are encoded with the "Apriltag" standard and are provided by way of a specific technology (for example laser cutting) in order to obtain maximum contrast between "solid" regions and "empty" regions.

In a further embodiment of the system 10 for monitoring civil engineering works and infrastructures particularly in urban areas, the measurement markers 20 and the control markers 22 are sized on the basis of the flight altitude of the aircraft 12 and of the definition of the optical sensor on board the aircraft 12.

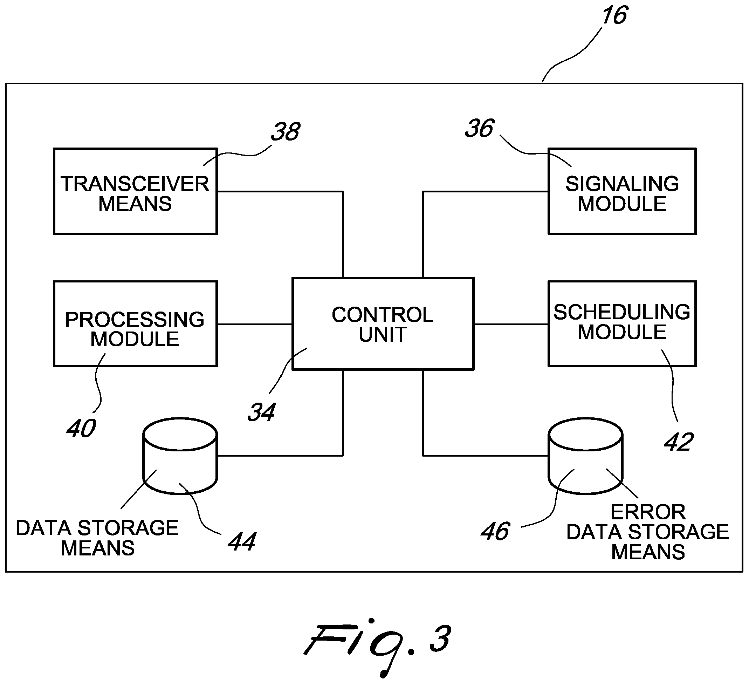

With particular reference to Figure 3, in an embodiment of the system 10 for monitoring civil engineering works and infrastructures particularly in urban areas, the remote processing device 16 comprises: a control unit 34, a signaling module 36, transceiver means 38, a processing module 40, a scheduling module 42, reference data storage means 44, and error data storage means 46.

The control unit 34 is the main functional element of the remote processing device 16 of the system 10 according to the invention, and for this reason it is connected to and communicates with the other elements that are comprised in the remote processing device 16 proper.

The control unit 34 of the remote processing device 16 is provided with appropriate capabilities for calculation and for interfacing with the other elements of the remote processing device 16 and it is configured to control, monitor and coordinate the operation of the elements of the remote processing device 16 to which it is connected and with which it communicates.

The signaling module 36 of the remote processing device 16 is configured to emit at least one alarm signal toward a user. By way of example, the signaling module 36 issues optional warnings if abnormal displacements of the monitored structure are detected.

The transceiver means 38 of the remote processing device 16 are configured to receive the measurement and control data from the aircraft 12. The transceiver means 38 of the remote processing device 16 are further configured to receive the respective images associated with the plurality of measurement markers 20 and with the plurality of control markers 22 from the aircraft 12.

In an embodiment of the system 10 for monitoring civil engineering works and infrastructures particularly in urban areas, the transceiver means 38 of the remote processing device 16 are further configured to receive data from weather stations arranged in the parking areas 18.

In an embodiment of the system 10 for monitoring civil engineering works and infrastructures particularly in urban areas, the transceiver means 38 of the remote processing device 16 are further configured to transmit data and commands towards the aircraft 12.

The processing module 40 of the remote processing device 16 is configured to generate an error function by way of the measurement and control data and the reference data. By way of example, the processing module 40 generates such error functions on the basis of the data gathered by the aircraft 12 and from the reference data measured during the installation of the control and measurement markers.

In an embodiment of the system 10 for monitoring civil engineering works and infrastructures particularly in urban areas, the processing module 40 is further configured to analyze any displacements of the control markers with respect to the measurement markers.

In a further embodiment of the system 10 for monitoring civil engineering works and infrastructures particularly in urban areas, the processing module 40 is further configured to compare the relative distances measured by the aircraft 12 with the ones measured initially by way of high-accuracy topographical systems.

The scheduling module 42 of the remote processing device 16 is configured to schedule flight and recharging activities of the aircraft 12 along a path 13. By way of example, the scheduling module 42 makes it possible to schedule the flight activity of the aircraft at specific time intervals, such as, for example, one flight every two days and to schedule the recharging of the aircraft 12 in the parking areas 18.

In an embodiment of the system 10 for monitoring civil engineering works and infrastructures particularly in urban areas, the scheduling module 42 is further configured to define and schedule geofences 13, i.e., virtual geographical borders within which the aircraft 12 is free to move.

The reference data storage means 44 of the remote processing device 16, such as for example a database, are configured to store reference data measured during the installation of the measurement markers 20 and of the control markers 22.

The error data storage means 46 of the remote processing device 16, such as for example a database, are configured to store the error functions generated by the processing module 40.

Operation of the system 10 for monitoring civil engineering works and infrastructures particularly in urban areas according to the present invention is described below.

Initially, in step 48 the aircraft 12 takes off from a parking area 18, following the flight schedule scheduled by the scheduling module 42 comprised within the remote processing device 16.

Then, in step 50, the aircraft 12 continues along the path 13 and acquires respective images from measurement and control markers arranged on the structure to be monitored.

By way of example, an optical sensor on board the aircraft 12 enables the acquisition of such images by way of an aerial photogrammetry scan with a tolerance limited to a few centimeters.

In step 52, the images acquired in the preceding step are interpreted into data by the interpretation means 31 comprised in the aircraft 12.

By way of example, for each acquired image there is a metadata set which comprises information about the respective portion of the structure to be monitored.

In step 54, the set of images and data of the preceding steps is stored respectively in the image storage means 32 and in the data storage means 33 which are comprised in the aircraft 12.

Then, in step 56, the aircraft 12 ends the monitoring of the structure in the path 13 and lands in a parking area 18.

In step 58, the aircraft 12 transmits the images and the data toward the remote processing device 16 via a telematic communication network.

Finally, in step 60, the processing module 40 comprised in the remote processing device 16 generates an error function on the basis of the measurement and control data received from the aircraft 12 and of the reference data that are present in the remote processing device 16 from the installation of the measurement markers 20 and control markers 22 on the structure to be monitored.

In practice it has been found that the invention fully achieves the intended aim and objects. In particular, it has been seen that the system and the method for monitoring civil engineering works and infrastructures particularly in urban areas, thus conceived, make it possible to overcome the qualitative limitations of the known art, since they make it possible to detect any displacements of the structures to be monitored by way of a plurality of markers that are positioned beforehand on such structures and are recognizable by the aircraft.

Another advantage of the system and method for monitoring civil engineering works and infrastructures particularly in urban areas according to the present invention lies in the fact that they enable a high reduction in energy consumption.

A further advantage of the system and method for monitoring civil engineering works and infrastructures particularly in urban areas according to the present invention lies in the fact that they make it possible to use state-of-the-art technological components.

Another advantage of the system and method for monitoring civil engineering works and infrastructures particularly in urban areas according to the present invention lies in the fact that they enable a considerable reduction in the data to be analyzed.

A further advantage of the system and method for monitoring civil engineering works and infrastructures particularly in urban areas according to the present invention lies in the fact that they can be adapted to the various different geometries of structures.

Although the system and method for monitoring civil engineering works and infrastructures particularly in urban areas according to the invention have been conceived in particular to monitor a structure subjected to stresses and to degenerative phenomena over time, they can also be used more generally to verify the response of a structure to renovation or repair interventions.

The invention thus conceived is susceptible of numerous modifications and variations, all of which are within the scope of the appended claims. All the details may further be replaced with other, technically equivalent elements.

In practice the materials used, so long as they are compatible with the specific use, as well as the contingent shapes and dimensions, may be any according to the requirements and to the state of the art.

To conclude, the scope of protection of the claims must not be limited by the illustrations or preferred embodiments given in the description by way of example, but rather the claims must comprise all the characteristics of patentable novelty that reside in the present invention, including all characteristics that would be treated as equivalents by the person skilled in the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (10) for monitoring civil engineering works and infrastructures particularly in urban areas, which comprises:
- an aircraft (12),
- parking areas (18) associated with said aircraft (12) and configured for the landing and the take off of said aircraft (12),
- a remote processing device (16), and
- a telematic communication network (14),
said aircraft (12) being connected to said remote processing device (16) by way of said telematic communication network (14),
wherein said aircraft (12) comprises: acquisition means (30) configured to acquire images, and transceiver means (26) configured to transmit data toward said remote processing device (16) via said telematic communication network (14),
**characterized in that** it comprises:
- a plurality of measurement markers (20) configured to be arranged on reference structures in the immediate vicinity of structures to be monitored, and
- a plurality of control markers (22) configured to be installed on the structures to be monitored,
and **in that** said acquisition means (30) comprised in said aircraft (12) are configured to acquire respective images from said plurality of measurement markers (20) and from said plurality of control markers (22);
said aircraft (12) further comprising interpretation means (31) configured to interpret said images from said plurality of measurement markers (20) and from said plurality of control markers (22) into measurement and control data;
said transceiver means (26) being configured to transmit said measurement and control data toward said remote processing device (16);
said remote processing device (16) being configured to process said measurement and control data that arrive from said aircraft (12) and analyse any displacement of the control markers (22) with respect to the measurement markers (20) in order to detect any displacements of the structures to be monitored.

2. The system (10) for monitoring civil engineering works and infrastructures particularly in urban areas according to claim 1, **characterized in that** said transceiver means (26) comprised in said aircraft (12) are further configured to transmit said respective images associated with said plurality of measurement markers (20) and with said plurality of control markers (22) toward said remote processing device (16).

3. The system (10) for monitoring civil engineering works and infrastructures particularly in urban areas according to claim 1 or 2, **characterized in that** said aircraft (12) further comprises geolocation means (28) configured to provide at least one geographical location of said aircraft (12) to said remote processing device (16).

4. The system (10) for monitoring civil engineering works and infrastructures particularly in urban areas according to any one of the preceding claims, **characterized in that** said aircraft (12) further comprises image storage means (32) configured to store said images associated with said plurality of measurement markers (20) and with said plurality of control markers (22).

5. The system (10) for monitoring civil engineering works and infrastructures particularly in urban areas according to any one of the preceding claims, **characterized in that** said aircraft (12) further comprises data storage means (33) configured to store said measurement and control data.

6. The system (10) for monitoring civil engineering works and infrastructures particularly in urban areas according to any one of the preceding claims, **characterized in that** said remote processing device (16) further comprises a signaling module (36) configured to emit at least one alarm signal toward a user.

7. The system (10) for monitoring civil engineering works and infrastructures particularly in urban areas according to any one of the preceding claims, **characterized in that** said remote processing device (16) further comprises a scheduling module (42) configured to schedule flight and recharging activities of said aircraft (12) along a path (13).

8. The system (10) for monitoring civil engineering works and infrastructures particularly in urban areas according to any one of the preceding claims, **characterized in that** said remote processing device (16) further comprises reference data storage means (44) configured to store reference data, said reference data being measured during an installation of said plurality of measurement markers (20) and said plurality of control markers (22).

9. The system (10) for monitoring civil engineering works and infrastructures particularly in urban areas according to any one of the preceding claims, **characterized in that** said remote processing device (16) further comprises a processing module (40) configured to generate an error function by way of said measurement and control data and said reference data.

10. The system (10) for monitoring civil engineering works and infrastructures particularly in urban areas according to any one of the preceding claims, **characterized in that** said remote processing device (16) further comprises error data storage means (46) configured to store said error functions generated by said processing module (40).

11. A method for monitoring civil engineering works and infrastructures particularly in urban areas, which comprises the steps of:
- arranging a plurality of measurement markers (20) on reference structures in the immediate vicinity of the structures to be monitored;
- installing a plurality of control markers (22) on the structures to be monitored;
- starting (48) the flight of an aircraft (12) accommodated in a first parking area (18);
- acquiring (50) by acquisition means comprised in said aircraft respective images from said plurality of measurement markers (20) and from said plurality of control markers (22);
- interpreting (52) said respective images into measurement and control data;
- storing (54) said respective images and said measurement and control data;
- ending (56) the flight of said aircraft (12) in a second parking area (18);
- transmitting (58) said respective images and said measurement and control data toward a remote processing device (16) by way of a telematic communication network (14);
- processing said measurement and control data and analyse any displacement of the control markers (22) with respect to the measurement markers (20) in order to detect any displacements of the structures to be monitored by way of the processing module (40) comprised in the remote processing device (16).

## Patentansprüche

1. Ein System (10) zum Überwachen von Bauwerken des Hoch-und Tiefbaus und von Infrastrukturen, insbesondere in städtischen Gebieten, das Folgendes umfasst:
- ein Luftfahrzeug (12),
- Parkflächen (18), die mit dem Luftfahrzeug (12) verknüpft und für das Landen und Starten des Luftfahrzeugs (12) ausgebildet sind,
- eine Fernverarbeitungsvorrichtung (16) und
- ein telematisches Kommunikationsnetz (14),
wobei das Luftfahrzeug (12) mit der Fernverarbeitungsvorrichtung (16) über das telematische Kommunikationsnetz (14) verbunden ist, wobei das Luftfahrzeug (12) Folgendes umfasst: Aufnahmemittel (30), konfiguriert zum Aufnehmen von Bildern, und Transceivermittel (26), konfiguriert, um Daten über das telematische Kommunikationsnetz (14) an die Fernverarbeitungsvorrichtung (16) zu übertragen,
**dadurch gekennzeichnet, dass** es Folgendes umfasst:
- eine Vielzahl von Messmarkern (20), ausgebildet, um auf Referenzstrukturen in der unmittelbaren Nähe zu überwachender Strukturen angeordnet zu werden, und
- eine Vielzahl von Kontrollmarkern (22), ausgebildet, um auf den zu überwachenden Strukturen angebracht zu werden;
und dadurch, dass Aufnahmemittel (30), die in dem Luftfahrzeug (12) umfasst sind, ausgebildet sind, um entsprechende Bilder von der Vielzahl von Messmarkern (20) und von der Vielzahl von Kontrollmarkern (22) aufzunehmen;
wobei das Luftfahrzeug (12) weiter Interpretationsmittel (31) umfasst, die konfiguriert sind, um die Bilder von der Vielzahl von Messmarkern (20) und der Vielzahl von Kontrollmarkern (22) in Mess-und Kontrolldaten umzuwandeln;
wobei die Transceivermittel (26) konfiguriert sind, um die Mess-und Kontrolldaten an die Fernverarbeitungsvorrichtung (16) zu übertragen;
wobei die Fernverarbeitungsvorrichtung (16) konfiguriert ist, um die Mess- und Kontrolldaten, die von dem Luftfahrzeug (12) kommen, zu verarbeiten und eine eventuelle Verschiebung der Kontrollmarker (22) gegenüber den Messmarkern (20) zu analysieren, um eventuelle Verschiebungen der zu überwachenden Strukturen zu erfassen.

2. Das System (10) zum Überwachen von Bauwerken des Hoch-und Tiefbaus und von Infrastrukturen, insbesondere in städtischen Gebieten, gemäß Anspruch 1, **dadurch gekennzeichnet, dass** die Transceivermittel (26), die in dem Luftfahrzeug (12) umfasst sind, weiter konfiguriert sind, um die jeweiligen Bilder, die mit der Vielzahl von Messmarkern (20) und mit der Vielzahl von Kontrollmarkern (22) verknüpft sind, an die Fernverarbeitungsvorrichtung (16) zu übertragen.

3. Das System (10) zum Überwachen von Bauwerken des Hoch-und Tiefbaus und von Infrastrukturen, insbesondere in städtischen Gebieten, gemäß Anspruch 1 oder 2, **dadurch gekennzeichnet, dass** das Luftfahrzeug (12) weiter Geolokalisierungsmittel (28) umfasst, die konfiguriert sind, um der Fernverarbeitungsvorrichtung (16) mindestens einen geografischen Ort des Luftfahrzeugs (12) zur Verfügung zu stellen.

4. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** das Luftfahrzeug (12) weiter Bildspeicherungsmittel (32) umfasst, die ausgebildet sind, um die Bilder, die mit der Vielzahl von Messmarkern (20) und mit der Vielzahl von Kontrollmarkern (22) verknüpft sind, zu speichern.

5. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** das Luftfahrzeug (12) weiter Datenspeicherungsmittel (33) umfasst, die konfiguriert sind, um die Mess- und Kontrolldaten zu speichern.

6. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** die Fernverarbeitungsvorrichtung (16) weiter ein Signalmodul (36) umfasst, das konfiguriert ist, um mindestens ein Alarmsignal an einen Nutzer zu senden.

7. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** die Fernverarbeitungsvorrichtung (16) weiter ein Planungsmodul (42) umfasst, das konfiguriert ist, um Flug- und Wiederaufladungsaktivitäten des Luftfahrzeugs (12) entlang einem Pfad (13) zu planen.

8. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** die Fernverarbeitungsvorrichtung (16) weiter Referenzdatenspeichermittel (44) umfasst, die konfiguriert sind, um Referenzdaten zu speichern, wobei die Referenzdaten während eines Anbringens der Vielzahl von Messmarkern (20) und der Vielzahl von Kontrollmarkern (22) gemessen werden.

9. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** die Fernverarbeitungsvorrichtung (16) weiter ein Verarbeitungsmodul (40) umfasst, das konfiguriert ist, um anhand der Mess- und Kontrolldaten und der Referenzdaten eine Fehlerfunktion zu generieren.

10. Das System (10) zum Überwachen von Bauwerken des Hoch-und Tiefbaus und von Infrastrukturen, insbesondere in städtischen Gebieten, gemäß einem beliebigen der obigen Ansprüche, **dadurch gekennzeichnet, dass** die Fernverarbeitungsvorrichtung (16) weiter Fehlerdatenspeichermittel (46) umfasst, die konfiguriert sind, um die Fehlerfunktionen zu speichern, die von dem Verarbeitungsmodul (40) generiert werden.

11. Ein Verfahren zum Überwachen von Bauwerken des Hoch- und Tiefbaus und von Infrastrukturen, insbesondere in städtischen Gebieten, das folgende Schritte umfasst:
- das Anordnen einer Vielzahl von Messmarkern (20) auf Referenzstrukturen in der unmittelbaren Nachbarschaft der zu überwachenden Strukturen;
- das Anbringen einer Vielzahl von Kontrollmarkern (22) auf den zu überwachenden Strukturen;
- das Starten (48) des Flugs eines Luftfahrzeugs (12), das in einer ersten Parkfläche (18) untergebracht ist;
- das Aufnehmen (50), durch Aufnahmemittel, die in dem Luftfahrzeug umfasst sind, jeweiliger Bilder von der Vielzahl von Messmarkern (20) und von der Vielzahl von Kontrollmarkern (22);
- das Umwandeln (52) der jeweiligen Bilder in Mess- und Kontrolldaten;
- das Speichern (54) der jeweiligen Bilder und der Mess- und Kontrolldaten;
- das Beenden (56) des Fluges des Luftfahrzeugs (12) in einer zweiten Parkfläche (18);
- das Senden (58) der jeweiligen Bilder und der Mess- und Kontrolldaten an eine Fernverarbeitungsvorrichtung (16) über ein telematisches Kommunikationsnetz (14);
- das Verarbeiten der Mess- und Kontrolldaten und das Analysieren einer eventuellen Verschiebung der Kontrollmarker (22) mit Bezug auf die Messmarker (20), um eventuelle Verschiebungen der zu überwachenden Strukturen durch das Verarbeitungsmodul (40), das in der Fernverarbeitungsvorrichtung (16) umfasst ist, zu erfassen.

## Revendications

1. Système (10) pour la surveillance d'ouvrages et d'infrastructures de génie civil en particulier dans des zones urbaines, comprenant :
- un aéronef (12),
- des zones de stationnement (18) associées audit aéronef (12) et configurées pour l'atterrissage et le décollage dudit aéronef (12),
- un dispositif de traitement à distance (16), et
- un réseau de communication télématique (14),
ledit aéronef (12) étant connecté audit dispositif de traitement à distance (16) au moyen dudit réseau de communication télématique (14),
dans lequel ledit aéronef (12) comprend : des moyens d'acquisition (30) configurés pour acquérir des images, et des moyens d'émission-réception (26) configurés pour transmettre des données audit dispositif de traitement à distance (16) par l'intermédiaire dudit réseau de communication télématique (14),
**caractérisé en ce qu'**il comprend :
- une pluralité de repères de mesure (20) configurés pour être agencés sur des structures de référence dans le voisinage immédiat de structures à surveiller ; et
- une pluralité de repères de contrôle (22) configurés pour être installés sur les structures à surveiller,
et **en ce que** lesdits moyens d'acquisition (30) compris dans ledit aéronef (12) sont configurés pour acquérir des images respectives de ladite pluralité de repères de mesure (20) et de ladite pluralité de repères de contrôle (22) ;
ledit aéronef (12) comprenant en outre des moyens d'interprétation (31) configurés pour interpréter les images de ladite pluralité de repères de mesure (20) et de ladite pluralité de repères de contrôle (22) en données de mesure et de contrôle ;
lesdits moyens d'émission-réception (26) étant configurés pour transmettre lesdites données de mesure et de contrôle audit dispositif de traitement à distance (16) ;
ledit dispositif de traitement à distance (16) étant configuré pour traiter lesdites données de mesure et de contrôle qui arrivent dudit aéronef (12) et analyser tout déplacement des repères de contrôle (22) par rapport aux repères de mesure (20) afin de détecter tout déplacement des structures à surveiller.

2. Système (10) pour la surveillance d'ouvrages et d'infrastructures de génie civil en particulier dans des zones urbaines selon la revendication 1, **caractérisé en ce que** lesdits moyens d'émission-réception (26) compris dans ledit aéronef (12) sont configurés en outre pour transmettre lesdites images respectives associées à ladite pluralité de repères de mesure (20) et à ladite pluralité de repères de contrôle (22) audit dispositif de traitement à distance (16).

3. Système (10) pour la surveillance d'ouvrages et d'infrastructures de génie civil en particulier dans des zones urbaines selon la revendication 1 ou 2, **caractérisé en ce que** ledit aéronef (12) comprend en outre des moyens de géolocalisation (28) configurés pour fournir au moins un emplacement géographique dudit aéronef (12) audit dispositif de traitement à distance (16).

4. Système (10) pour la surveillance d'ouvrages et d'infrastructures de génie civil en particulier dans des zones urbaines selon l'une quelconque des revendications précédentes, **caractérisé en ce que** ledit aéronef (12) comprend en outre des moyens de stockage d'images (32) configurés pour stocker lesdites images associées à ladite pluralité de repères de mesure (20) et à ladite pluralité de repères de contrôle (22).

5. Système (10) pour la surveillance d'ouvrages et d'infrastructures de génie civil en particulier dans des zones urbaines selon l'une quelconque des revendications précédentes, **caractérisé en ce que** ledit aéronef (12) comprend en outre des moyens de stockage de données (33) configurés pour stocker lesdites données de mesure et de contrôle.

6. Système (10) pour la surveillance d'ouvrages et d'infrastructures de génie civil en particulier dans des zones urbaines selon l'une quelconque des revendications précédentes, **caractérisé en ce que** ledit dispositif de traitement à distance (16) comprend en outre un module de signalisation (36) configuré pour émettre au moins un signal d'alarme à l'intention d'un utilisateur.

7. Système (10) pour la surveillance d'ouvrages et d'infrastructures de génie civil en particulier dans des zones urbaines selon l'une quelconque des revendications précédentes, **caractérisé en ce que** ledit dispositif de traitement à distance (16) comprend en outre un module de planification (42) configuré pour planifier des activités de vol et de recharge dudit aéronef (12) le long d'un trajet (13).

8. Système (10) pour la surveillance d'ouvrages et d'infrastructures de génie civil en particulier dans des zones urbaines selon l'une quelconque des revendications précédentes, **caractérisé en ce que** ledit dispositif de traitement à distance (16) comprend en outre des moyens de stockage de données de référence (44) configurés pour stocker des données de référence, lesdites données de référence étant mesurées au cours d'une installation de ladite pluralité de repères de mesure (20) et de ladite pluralité de repères de contrôle (22).

9. Système (10) pour la surveillance d'ouvrages et d'infrastructures de génie civil en particulier dans des zones urbaines selon l'une quelconque des revendications précédentes, **caractérisé en ce que** ledit dispositif de traitement à distance (16) comprend en outre un module de traitement (40) configuré pour générer une fonction d'erreur au moyen desdites données de mesure et de contrôle et desdites données de référence.

10. Système (10) pour la surveillance d'ouvrages et d'infrastructures de génie civil en particulier dans des zones urbaines selon l'une quelconque des revendications précédentes, **caractérisé en ce que** ledit dispositif de traitement à distance (16) comprend en outre des moyens de stockage de données d'erreur (46) configurés pour stocker lesdites fonctions d'erreur générées par ledit module de traitement (40).

11. Procédé pour la surveillance d'ouvrages et d'infrastructures de génie civil en particulier dans des zones urbaines, comprenant les étapes consistant à :
- agencer une pluralité de repères de mesure (20) sur des structures de référence dans le voisinage immédiat des structures à surveiller ;
- installer une pluralité de repères de contrôle (22) sur les structures à surveiller ;
- commencer (48) le vol d'un aéronef (12) logé dans une première zone de stationnement (18) ;
- acquérir (50), par des moyens d'acquisition compris dans ledit aéronef, des images respectives de ladite pluralité de repères de mesure (20) et de ladite pluralité de repères de contrôle (22) ;
- interpréter (52) lesdites images respectives en données de mesure et de contrôle ;
- stocker (54) lesdites images respectives et lesdites données de mesure et de contrôle ;
- terminer (56) le vol dudit aéronef (12) dans une seconde zone de stationnement (18) ;
- transmettre (58) lesdites images respectives et lesdites données de mesure et de contrôle à un dispositif de traitement à distance (16) au moyen d'un réseau de communication télématique (14) ;
- traiter lesdites données de mesure et de contrôle et analyser tout déplacement des repères de contrôle (22) par rapport aux repères de mesure (20) afin de détecter tout déplacement des structures à surveiller au moyen du module de traitement (40) compris dans le dispositif de traitement à distance (16).
